# EUROPEAN PATENT APPLICATION

(11) **EP 3 382 869 A1**
(43) Date of publication of application: **03.10.2018**
(21) Application number: 17460018.9
(22) Date of filing: 31.03.2017
(51) Int. Cl.: H02M 1/092, H02M 1/096, H02M 5/12

(54) **ON-LOAD POWER ELECTRONIC TAP-CHANGER WITH POWER ELECTRONIC VALVES**

(71) Applicant: ABB Schweiz AG, 5400 Baden (CH)
(72) Inventor: Aloszko, Pawel, 31-421 Krakow (PL); Obrebski, Krzysztof, 01-416 Warszawa (PL); Grecki, Filip, 31-421 Krakow (PL); Ostrogorska, Magdalena, 30-199 Rzaska (PL); Jez, Radoslaw, 44-240 Zory (PL); Sobczak, Witold, 95-200 Pabianice (PL); Czopek, Marcin, 31-467 Krakow (PL); Piasecki, Wojciech, 31-347 Krakow (PL)
(74) Representative: Chochorowska-Winiarska, Krystyna

(57) **Abstract**

The subject of the invention is an on-load power electronic tap changer with passive power electronic valves, having application in power or distribution transformers. The on-load power electronic tap changer comprises a control module (7) and a power electronic tap-changer module (1), which comprises a plurality of power electronic valves (V1... Vn). Each of the power electronic valve (V1... Vn) is connected with the control module (7) by an optical connector (C1... Cn) and comprises a main valve module (8) for current conduction between a first and second terminal. The first terminal is connected to a voltage source and the second terminal is connected to a transformer tap. Every single power electronic valve (V1... Vn) of the on-load power electronic tap changer is galvanically isolated from the control module (7) by optical connections (C1... Cn). The power electronic valve (V1... Vn) is adapted for triggering the main valve module (8) through the optical connector (C1... Cn) by a triggering circuit (9). The triggering circuit (9) is powered from voltage between the first and the second terminal. The power electronic valve (V1... Vn) can be also adapted for triggering the main valve module (8) directly through the optical connector (C1... Cn).

## Description

The subject of the invention is an on-load power electronic tap changer with passive power electronic valves, having application in power or distribution transformers.

### BACKGROUND OF THE INVENTION

Tap changers for transformers are well known and commonly used in power or distribution transformers. Their purpose is to regulate the output voltage in limited range. The most common and simple solution is mechanical off-load tap changer where switching between taps needs to be done manually at no-voltage conditions. The on-load tap changers are more advanced devices which allow for switching between transformer taps without interrupting the power flow, at full-voltage conditions.

There are three types of on-load tap changers: mechanical, power electronic and hybrid. In the purely mechanical tap changers, power flows only through mechanical contacts. In power electronic tap changers, power flows only through power electronic element such as transistor or thyristor and in the last hybrid solutions, where both mechanical and power electronics components are used, power flows through electronic components only for time of switching as current bypass.

All types of on-load tap changers are equipped with a control module. In most cases the control module needs to have galvanic isolation from the active tap changer part, due to different voltage levels applied. In mechanical and hybrid solutions the isolation is achieved by usage of non-conducting parts in switching mechanism driven by motor on the low voltage side.

In case of power electronic solution there is a need to deliver energy to each valve in order to trigger the current conduction. Usually it is realized with use of gate driver circuits including transformers, which provide required isolation between control and active part of a tap changer. Utility model application CN 201689773 discloses the power electronic tap changer including the control unit that triggers power electronic valves by connected optical fibers. However, the described triggering circuit requires energy that in the application is provided by high voltage power supply. The problem is that the gate driver transformers for medium and high voltage applications require big and costly winding insulation so as to maintain the right voltage withstand level.

### SUMMARY OF THE INVENTION

An on-load power electronic tap-changer of the invention comprises a control module and a power electronic tap-changer module, which comprises a plurality of power electronic valves. Each of the power electronic valve is connected with the control module by an optical connector and comprises a main valve module for current conduction between a first and second terminal. The first terminal is connected to a voltage source and the second terminal is connected to a transformer tap. The essence of the invention is that every single power electronic valve of the on-load power electronic tap changer is galvanically isolated from the control module by optical connections and the power electronic valve is adapted for triggering the main valve module through the optical connector by a triggering circuit. The triggering circuit is powered from voltage between the first and the second terminal. The power electronic valve can be also adapted for triggering the main valve module directly through the optical connector. Every single power electronic valve contains only three inputs/outputs: two current terminals connected directly to the transformer tap and transformer winding and on one optical connector to trigger the valve by continuous or short light impulse.

Preferably, the triggering circuit comprises a light signal receiver for receiving a signal from the optical connector, a triggering transistor connected to the light signal receiver and a set of rectifier diodes connected to the triggering transistor and to the main valve module. Preferably, the triggering circuit comprises amplifier connected between the light signal receiver and the triggering transistor.

Preferably, the main valve module comprises two unipolar power semiconductor elements antiparallel connected.

Alternatively, the main valve module comprises photo semiconductor elements.

Preferably, the photo semiconductor element is a light triggered thyristor (LTT).

### BRIEF DESCRIPTION OF THE DRAWINGS

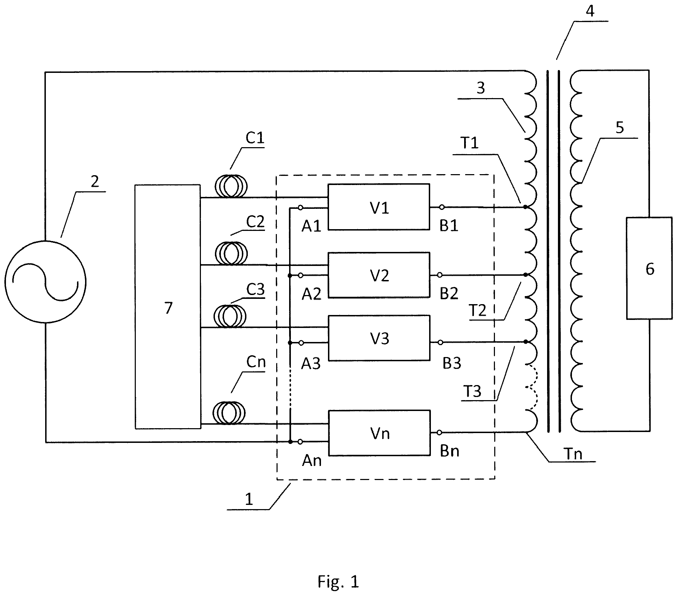

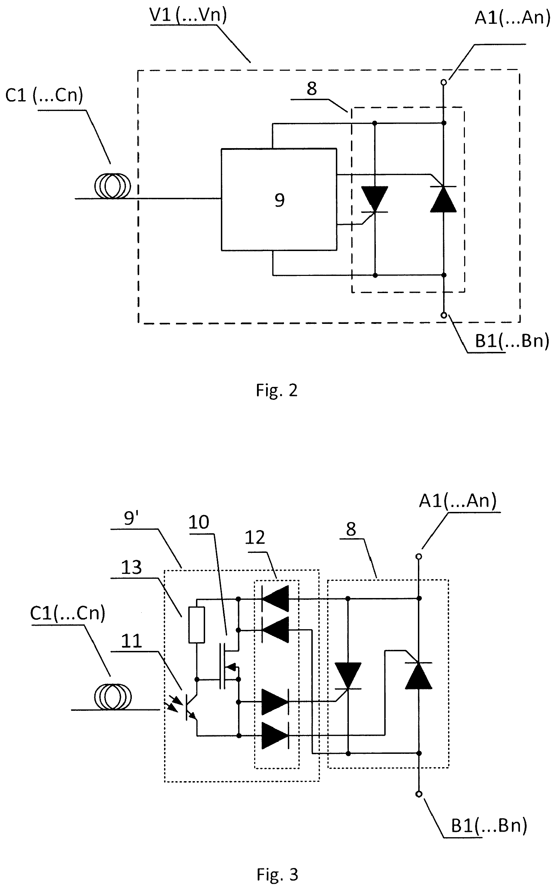

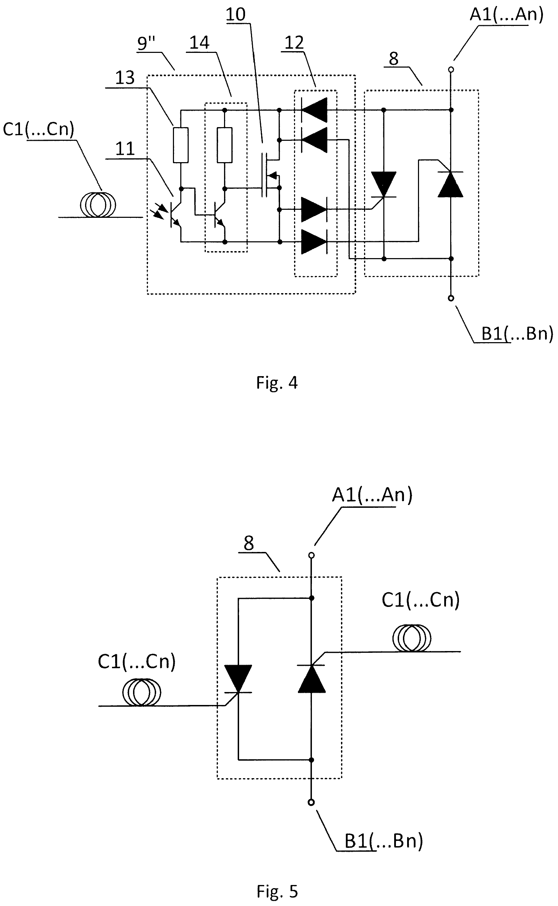

The tap-changer according to the invention is explained with an example of their embodiment, see the drawing where fig. 1 shows a schematic diagram of an on-load power electronic tap changer of a transformer, fig. 2 shows schematic diagram of the first embodiment of the invention, fig. 3 shows schematic circuit of the first version of the first embodiment, fig. 4 shows schematic circuit of the second version of the first embodiment and fig. 5 shows schematic circuit of the second embodiment of the invention.

### DETAILED DESCRIPTION OF THE INVENTION

In all embodiments of the invention, on-load power electronic tap changer contains control module 7 working at low voltage potential and set of power electronic valves V1 ... Vn, working at medium or high voltage potential, where n is the number of power electronic valves, preferably 3 to 7. The set of valves form a power electronic tap changer module 1, which is connected to the primary winding 3 of distribution transformer 4 through the primary winding taps T1...Tn. The transformer is supplied from primary side by voltage or current source 2 and has a load impedance 6 connected to the secondary winding 5. The description "primary" and "secondary" are interchangeable in presented invention, therefore circuit can be reversed and supplied from secondary side, as well as the power electronic tap changer module 1 can be connected to the secondary winding. The power electronic tap changer module 1 is controlled by the control module 7, which is equipped with optical connectors C1...Cn. Each of the optical connectors C1...Cn comprises one or more optical fibers. Control signals are sent from the control module 7 through the optical connectors C1...Cn and are received by the power electronic valves V1...Vn in the power electronic tap changer module 1.

In the first version of the first embodiment of the invention, the optical connector C1....Cn comprises only one optical fiber, through which the control signals are sent to the input of the power electronic valve V1...Vn. The input is realized by a light signal receiver 11, e.g. in form of photodetector. The light signal receiver is part of triggering circuit 9' which triggers or blocks the main valve module 8 depending on the light signal receiver 11 state: closed or open. The main valve module 8 is realized as pair of antiparallel connected thyristors, which anodes and cathodes are connected to the first terminal A1...An and the second terminal B1...Bn and gates are connected to a set of rectifier diodes 12 in a way that anodes of rectifier diodes are connected to first terminal A1...An and the second terminal B1...Bn and cathodes of rectifier diodes are connected to gates. There is a variation possible, where all rectifier diodes are connected to gates, and there is no direct connection to main terminals. The purpose of using the set of rectifier diodes 12 is to provide unipolar signal for triggering circuit, which is realized using transistor 10 and impedance 13, connected to the light signal receiver 11. The transistor 10 can be done in form of MOSFET, IGBT, BJT, SCR, GTO and similar semiconductors, or in a form of mechanical switch. The impedance 13 can be resistive, inductive, capacitive or any combination of mentioned variants.

In the second version of the first embodiment of the invention, the additional amplifier stage 14 is done in a form of buffer or signal amplifier using single or multiple transistors of any type or mechanical switches.

In the second embodiment of the invention, the triggering signal is directly sent from the control module 7 to the main valve module 8 of power electronic valve V1...Vn. The main valve module 8 is equipped with photosensitive power semiconductor elements, like light triggered thyristors (LTT). In that case, the main valve module 8 is realized as pair of antiparallel connected light triggered thyristors, which anodes and cathodes are connected to the first terminal A1...An and the second terminal B1...Bn and gates, done in form of optical connectors, are connected to directly to optical connections C1...Cn. The single optical connection C1...Cn is in form of two optical fibers, each fiber connected to photosensitive gate of each light triggered thyristors. The energy of the light signal transferred by connections C1...Cn is sufficient for thyristor triggering and therefore the power electronic valve V1...Vn does not need additional power supply.

## Claims

1. On-load power electronic tap-changer for transformer (4) comprising a control module (7) and a power electronic tap-changer module (1), which comprises a plurality of power electronic valves (V1...Vn), where each of the power electronic valves (V1...Vn) is connected with the control module (7) by an optical connector (C1...Cn), where the optical connector comprises at least one optical fiber, and each of the power electronic valves (V1...Vn) comprises a main valve module (8) for current conduction between a first terminal (A1...An) and a second terminal (B1...Bn) of the power electronic valve (V 1... Vn), where the first terminal (A1...An) is connected to a voltage source (2) and the second terminal (B1...Bn) is connected to a transformer tap (T1...Tn)
**characterized in that**
the power electronic valve (V1...Vn) is adapted for triggering the main valve module (8) through the optical connector (C1...Cn) by a triggering circuit (9, 9', 9") connected between the optical connector (C1...Cn) and the main valve module (8) and the triggering circuit (9, 9', 9") is powered from voltage between the first terminal (A1..An) and the second terminal (B1...Bn) or the power electronic valve (V1...Vn) is adapted for triggering the main valve module (8) directly through the optical connector (C1...Cn).

2. The tap-changer according to claim 1, wherein the power electronic valve (V1...Vn) comprises three inputs/outputs formed by two electrical connections established by the first terminal (A1...An) and by the second terminal (B1...Bn) and one optical connector (C1...Cn).

3. The tap-changer according to claim 1 or 2, wherein the triggering circuit (9', 9") comprises a light signal receiver (11) for receiving a signal from the optical connector (C1...Cn), a triggering transistor (10) connected to the light signal receiver (11) and a set of rectifier diodes (12) connected to the triggering transistor (10) and to the main valve module (8).

4. The tap-changer according to claim 3, wherein the triggering circuit (9") comprises amplifier (14) connected between the light signal receiver (11) and the triggering transistor (10).

5. The tap-changer according to claim 1 or 2, wherein the main valve module (8) comprises two unipolar power semiconductor elements antiparallel connected.

6. The tap-changer according to claim 1 or 2, wherein the main valve module (8) comprises photosensitive semiconductor elements.

7. The tap-changer according to claim 6, wherein the photosensitive semiconductor element is a light triggered thyristor (LTT).
